# EUROPEAN PATENT SPECIFICATION

(11) **EP 3 056 543 B1**
(45) Date of publication and mention of the grant of the patent: **11.12.2019**
(21) Application number: 14851851.7
(22) Date of filing: 06.10.2014
(51) Int. Cl.: C08L 69/00, C08L 51/04, C08L 25/12, C08K 5/13, C08K 5/375

(54) **RESIN COMPOSITION CONTAINING POLYCARBONATE RESIN FOR WINDOW FRAMES**
HARZZUSAMMENSETZUNG MIT EINEM POLYCARBONATHARZ FÜR FENSTERRAHMEN
COMPOSITION DE RÉSINE CONTENANT UNE RÉSINE POLYCARBONATE POUR CADRES DE FENÊTRES

(30) Priority: 07.10.2013 KR 20130119421
(43) Date of publication of application: 17.08.2016
(73) Proprietor: Korea Kumho Petrochemical Co., Ltd., Seoul 100-230 (KR)
(72) Inventor: KIM, Myung Youn, Yuseong-gu Daejeon 305-759 (KR); KIM, Jin Sung, Daejeon 305-741 (KR); KIM, Yun Hwan, Seoul 122-200 (KR); YUN, Seung Hee, Yongin-si Gyeonggi-do 448-728 (KR); LEE, Che Cheol, Sejong 339-764 (KR)
(74) Representative: Isarpatent
(86) International application number: PCT/KR2014/009377
(87) International publication number: WO 2015/053517

(56) References cited:
- EP-A1- 0 062 838
- EP-A1- 2 475 701
- CN-A- 101 486 825
- KR-B1- 100 680 338
- KR-B1- 100 876 844
- KR-B1- 100 876 844

## Description

### Technical Field

The present invention relates to a resin composition containing a polycarbonate resin for window frames. More specifically, the present invention relates to a resin composition for window frames containing a polycarbonate resin mixed with an ultra-high molecular weight copolymer resin of styrene-based monomer-vinyl cyan-based monomer.

### Background Art

Polyvinyl chloride (PVC) resin has been widely used as a raw material for window frames, which are one of construction materials. However, the polyvinyl chloride resin may generate a large amount of dioxin, which is a substance harmful to the environment during extrusion processing or fire. Also, heavy metal ions contained in cadmium stearate (Cd-st) or lead stearate (Pb-st), etc. used as a thermal stabilizer activate as a human hormone disruptor, and thus are objects of regulation. They are also the main cause of sick house syndrome, etc.

In order to solve the problems of the conventional polyvinyl chloride (PVC) resin or acrylonitrile-butadiene-styrene-based (ABS-based) resin, development for environment-friendly construction materials is in progress.

Korean Patent Laid-Open Nos. 10-2012-0066197 and 10-2012-0065547 disclose a resin composition including a 4-membered copolymer resin of acrylic-based rubber-styrene-based monomer-butadiene rubber-vinyl cyan-based monomer, and a 4-membered bulk polymer consisting of styrene-based vinyl cyan-based copolymer having great disparity and N-substituted maleimide monomer-α-alkyl styrene-based-unsaturated nitrile monomer, and aim to solve the environmental problem caused by the conventional polyvinyl chloride resin through this. However, there are problems that it is difficult to secure the required property because of deterioration of dimension stability and deterioration of impact strength by inorganic materials.

Also, Korean Patent Laid-Open No. 10-2006-0136567 discloses a composition of polycarbonate resin, methyl methacrylate-butadiene copolymer (ABS-based) resin and styrene-based vinyl cyan-based copolymer resin (SAN), and aims to improve molding workability of the conventional polycarbonate resin through this. However, there are still problems that it is difficult to secure the required dimension stability because of the high coefficient of linear expansion.

In order to solve the above problems, the present inventors developed a resin composition for window frames with low coefficient of linear expansion and excellent impact resistance by using an ultra-high molecular weight copolymer resin of styrene-based monomer-vinyl cyan-based monomer having a non-linear structure.

KR-B-100876844 describes polymer compositions comprising as a major component a polycarbonate resin, an ultra-high molecular weight copolymer resin of styrene based monomer-vinyl cyan-based monomer (SAN) with a weight average molecular weight of 1,000,000 to 7,000,000 and a methacrylate butadiene styrene impact modifier.

CN-A-101486825 describes a method for preparing weather resistance polycarbonate/acrylonitrile-styrene-acrylic ester copolymer alloy (PC/ASA alloy).

### Detailed Description of the Invention

### Technical Task

The present invention is to solve the above problems of conventional art, and it aims to provide a resin composition for window frames with excellent strength and dimension stability, and low coefficient of linear expansion with respect to deformation or distortion of window frames that may occur by rise of ambient temperature by mixing an ultra-high molecular weight copolymer resin of styrene-based monomer-vinyl cyan-based monomer having a weight average molecular weight (Mw) of at least 1,000,000 with respect to a polycarbonate resin.

### Technical Solution

In order to achieve the above object, the present invention provides a resin composition for window frames containing a polycarbonate resin including 40 to 95 wt% of a polycarbonate resin; 1 to 50 wt% of a copolymer resin of acrylic-based rubber-styrene-based monomer-vinyl cyan-based monomer; and 10 to 30 wt% of an ultra-high molecular weight copolymer resin of styrene-based monomer-vinyl cyan-based monomer having a weight average molecular weight (Mw) of 1,000,000 to 3,000,000, based on the total weight of the resin composition for window frames, wherein the resin composition for window frames further comprises 0.5 to 5 parts by weight of polypropylene glycol, with respect to 100 parts by weight of the resin composition for window frames .

According to an embodiment, the resin composition for window frames may further include 1 to 50 wt% of a high molecular weight copolymer resin of styrene-based monomer-vinyl cyan-based monomer having a weight average molecular weight (Mw) of 100,000 to 300,000, based on the total weight of the resin composition for window frames.

According to an embodiment, the molecular weight distribution (Mw/Mn) of the high molecular weight copolymer resin of styrene-based monomer-vinyl cyan-based monomer may be between 2.5 and 5.0.

In the present invention, the resin composition for window frames includes 0.5 to 5 parts by weight of polypropylene glycol, with respect to 100 parts by weight of the resin composition for window frames.

According to an embodiment, the polycarbonate resin may include at least one selected from the group consisting of bisphenol-A-polycarbonate resin, tetramethyl-polycarbonate resin, bisphenol-Z-polycarbonate resin, tetrabromo-polycarbonate resin, and tetraacrylo-polycarbonate resin.

According to an embodiment, the copolymer resin of acrylic-based rubber-styrene-based monomer-vinyl cyan-based monomer may be a copolymer having styrene and acrylonitrile graft-polymerized with acrylic-based rubber.

According to an embodiment, the composition of the acrylic-based rubber, styrene, and acrylonitrile may be 40 to 85 wt%, 5 to 20 wt%, and 10 to 40 wt%, respectively, based on the total weight of the copolymer resin of acrylic-based rubber-styrene-based monomer-vinyl cyan-based monomer.

According to an embodiment, the ultra-high molecular weight copolymer resin of styrene-based monomer-vinyl cyan-based monomer may be a copolymer having a non-linear structure polymerizing 0.005 to 7 parts by weight of multifunctional acrylic-based monomer and 0.01 to 6 parts by weight of multifunctional mercaptan, with respect to 100 parts by weight of a monomer mixture including aromatic vinyl cyan-based monomer and styrene-based monomer.

According to an embodiment, the composition of the aromatic vinyl cyan-based monomer and the styrene-based monomer may be 50 to 90 wt% and 10 to 50 wt%, respectively, based on the total weight of the ultra-high molecular weight copolymer resin of styrene-based monomer-vinyl cyan-based monomer.

According to an embodiment, the resin composition for window frames may further include 5 to 30 parts by weight of flame retardants, 1 to 6 parts by weight of pigments, 0.01 to 5 parts by weight of antioxidants, 0.01 to 5 parts by weight of UV absorbers, and 0.3 to 5 parts by weight of lubricants, with respect to 100 parts by weight of the resin composition for window frames.

According to an embodiment, the antioxidant may include at least one selected from the group consisting of phenolic antioxidants, phosphorus antioxidants, and sulfuric ester antioxidants.

### Advantageous Effects

According to an embodiment of the present invention, window frames with excellent mechanical properties such as impact resistance, strength, dimension stability, and low coefficient of linear expansion with respect to deformation or distortion of window frames that may occur by rise of ambient temperature may be prepared by using a resin composition mixed with an ultra-high molecular weight copolymer resin of styrene-based monomer-vinyl cyan-based monomer having a weight average molecular weight (Mw) of 1,000,000 or more with respect to a polycarbonate resin.

The effects of the present invention are not limited to the above-mentioned effects, and it should be understood that the effects of the present invention include all effects that can be inferred from the configuration of the invention described in the detailed description of the invention or the appended claims.

### Brief description of drawings

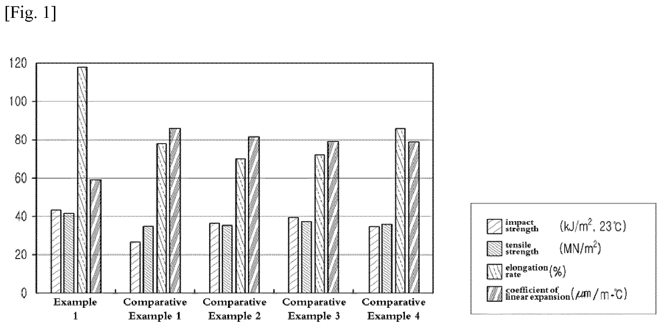

Fig. 1 is a schematic diagram of the test results evaluating properties of a resin composition for window frames according to an embodiment of the present invention.

### Modes for carrying out the invention

Hereinafter, the present invention will be explained with reference to the accompanying drawings. Also, in order to clearly explain the present invention, portions that are not related to the present invention are omitted, and like reference numerals are used to refer to like elements throughout.

Throughout the specification, it will be understood that when a component "includes" an element, unless there is another opposite description thereto, it should be understood that the component does not exclude another element but may further include another element.

Hereinafter, examples of the present invention will be explained in more detail with reference to the accompanying drawings.

According to the present invention, there is provided a resin composition for window frames containing a polycarbonate resin including 40 to 95 wt% of a polycarbonate resin; 1 to 50 wt% of a copolymer resin of acrylic-based rubber-styrene-based monomer-vinyl cyan-based monomer; and 10 to 30 wt% of an ultra-high molecular weight copolymer resin of styrene-based monomer-vinyl cyan-based monomer having a weight average molecular weight (Mw) of 1,000,000 to 3,000,000, based on the total weight of the resin composition for window frames, wherein the resin composition for window frames further comprises 0.5 to 5 parts by weight of polypropylene glycol, with respect to 100 parts by weight of the resin composition for window frames.

### Polycarbonate resin (A)

According to the present invention, the resin composition for window frames includes a polycarbonate resin. The polycarbonate resin may be prepared by reacting diphenols with phosgene, halogen formate or carbonate diester.

Preferably, as the polycarbonate resin, at least one selected from the group consisting of bisphenol-A-polycarbonate resin, tetramethyl-polycarbonate resin, bisphenol-Z-polycarbonate resin, tetrabromo-polycarbonate resin, and tetraacrylo-polycarbonate resin may be used. Preferably, bisphenol-A-polycarbonate resin which has excellent compatibility and impact resistance may be used.

In the present invention, the content of the polycarbonate resin is between 40 and 95 wt% based on the total weight of the resin composition for window frames. When the content is less than 40 wt%, it is difficult to achieve the desired impact strength and moldability, and when the content exceeds 95 wt%, it may cause the surface of the window frames to be in a poor condition.

As the polycarbonate resin, a polycarbonate resin of low viscosity capable of being processed at conventional PVC extrusion temperature may be used.

The weight average molecular weight (Mw) of the polycarbonate resin may be in the range of 10,000 to 200,000, and preferably in the range of 15,000 to 80,000. When the weight average molecular weight (Mw) of the polycarbonate resin exceeds 200,000, the dispersibility would deteriorate, and thus it would be difficult to achieve the appearance required for the product, and the impact strength and elongation rate may deteriorate. When the weight average molecular weight (Mw) of the polycarbonate resin is less than 10,000, the tensile strength of the product may deteriorate.

### Copolymer resin of acrylic-based rubber-styrene-based monomer-vinyl cyan-based monomer (B)

According to the present invention, the resin composition for window frames includes a copolymer resin of acrylic-based rubber-styrene-based monomer-vinyl cyan-based monomer.

The copolymer resin of acrylic-based rubber-styrene-based monomer-vinyl cyan-based monomer may be a resin having a molecular structure where weathering deterioration hardly occurs by using an acrylic-based rubber with no double bond, instead of a polybutadiene used for reinforcing impact in an acrylonitrile-butadiene-styrene copolymer (hereinafter, "ABS resin"). The weather resistance was improved as compared with the conventional ABS resin, and thus any change in resin properties and appearance of window frames were remarkably reduced even when used outdoor for a long period of time. Also, it may present excellent appearance even by coloring of the raw material without a separate painting process.

The acrylic-based rubber is a rubber prepared by polymerizing an acrylic-based monomer. The acrylic-based monomer may be, preferably, alkyl acrylate having 2 to 8 carbon atoms, preferably, butyl acrylate or ethylhexyl acrylate, and more preferably, butyl acrylate.

The acrylic-based rubber may be a mixture of the acrylic-based monomer and a monomer having an unsaturated group that can be copolymerized therewith. In this case, the acrylic-based monomer in the mixture may have a glass transition temperature (Tg) of a low range so that the final product presents rubber properties.

Also, the acrylic-based rubber may be a mixture of acrylic-based rubber and butadiene-based rubber. The butadiene-based rubber is a polymer of a conjugated diene-based monomer. As the conjugated diene-based monomer, butadiene, isoprene, chloroprene, butadiene-styrene, or butadiene-methacrylate may be used.

According to the present invention, the content of the copolymer resin of acrylic-based rubber-styrene-based monomer-vinyl cyan-based monomer is 1 to 50 wt%, based on the total weight of the resin composition for window frames. When the content is less than 1 wt%, long-term weather resistance may deteriorate, thereby causing unnecessary discoloring. When the content exceeds 50 wt%, the appearance of the window frame may deteriorate during processing.

The copolymer resin of acrylic-based rubber-styrene-based monomer-vinyl cyan-based monomer may be prepared by general emulsion polymerization.

The term "emulsion polymerization" as used in the present specification means a polymerization method using a water-soluble initiator by emulsifying an oil-soluble monomer in water by a surfactant.

According to an embodiment, the copolymer resin of acrylic-based rubber-styrene-based monomer-vinyl cyan-based monomer may be prepared by polymerizing an acrylic-based monomer such as butyl acrylate to prepare an acrylic-based rubber latex, and then graft-polymerizing styrene-based monomer with acrylonitrile.

The composition of the acrylic-based rubber, styrene, and acrylonitrile may be 40 to 85 wt%, 5 to 20 wt%, and 10 to 40 wt%, respectively, based on the total weight of the copolymer resin of acrylic-based rubber-styrene-based monomer-vinyl cyan-based monomer.

Also, in order to improve the impact strength and molding surface, the copolymer resin of acrylic-based rubber-styrene-based monomer-vinyl cyan-based monomer may have a particle size of 0.05 to 4 µm.

### Ultra-high molecular weight copolymer resin of styrene-based monomer-vinyl cyan-based monomer (C1)

According to the present invention, the resin composition for window frames includes an ultra-high molecular weight copolymer resin of styrene-based monomer-vinyl cyan-based monomer having a weight average molecular weight (Mw) of 1,000,000 to 3,000,000.

Preferably, as the styrene-based monomer, at least one selected from the group consisting of styrene, alpha-methylstyrene, p-methylstyrene, and vinyl toluene or a mixture thereof may be used as an aromatic vinyl monomer, and preferably styrene may be used.

As the vinyl cyan-based monomer, acrylonitrile, methacrylonitrile, or a mixture thereof may be used, and preferably acrylonitrile may be used.

The ultra-high molecular weight copolymer resin of styrene-based monomer-vinyl cyan-based monomer may be prepared by general emulsion polymerization, mass polymerization, or suspension polymerization, and preferably may be prepared by emulsion polymerization.

The term "mass polymerization" as used in the present specification means a method polymerizing only a monomer in a state where there is no solvent. It may also be referred to as bulk polymerization.

The term "suspension polymerization" as used in the present specification means a polymerization method dispersing in water a monomer that is insoluble in water with oil bubbles having a diameter of about 0.1 to 5 mm.

When the weight average molecular weight (Mw) is less than 1,000,000, the impact resistance may deteriorate, and when it exceeds 3,000,000, there may be problems such that pin-holes may occur. Thus, it would be preferable to maintain this range.

Generally, the composition of the ultra-high molecular weight copolymer resin of styrene-based monomer-vinyl cyan-based monomer can be 1 to 30 wt% based on the total weight of the resin composition for window frames, and can also be 5 to 30 wt%. In the present invention, the composition of the ultra-high molecular weight copolymer resin of styrene-based monomer-vinyl cyan-based monomer is 10 to 30 wt% based on the total weight of the resin composition for window frames.

When the composition of the ultra-high molecular weight copolymer resin of styrene-based monomer-vinyl cyan-based monomer is less than 1 wt%, the effect of reducing the coefficient of linear expansion may be relieved. When the composition exceeds 30 wt%, the appearance may be improved, but the elongation rate and impact resistance of the product may not be achieved, thereby degrading the balance between the required properties.

Preferably, the ultra-high molecular weight copolymer resin of styrene-based monomer-vinyl cyan-based monomer may be a copolymer having a non-linear structure polymerizing 0.005 to 7 parts by weight of multifunctional acrylic-based monomer and 0.01 to 6 parts by weight of multifunctional mercaptan, with respect to 100 parts by weight of a monomer mixture consisting of aromatic vinyl cyan-based monomer and styrene-based monomer.

When the content of the multifunctional acrylic-based monomer is less than 0.005 parts by weight, the extension rate or elongation rate may deteriorate. When the content exceeds 7 parts by weight, gel reaction proceeds when preparing copolymers, and thus non-melted gel may occur on the surface when molding the sheet.

The multifunctional mercaptan is a compound having at least three -SH groups. For example, there are trivalent multifunctional mercaptan and tetravalent multifunctional mercaptan.

The trivalent multifunctional mercaptan may be trimethylpropane tri(3-mercaptopropionate), trimethylpropane tri(3-mercaptoacetate), trimethylpropane tri(4-mercaptobutanate), trimethylpropane tri(5-mercaptopentanate), trimethylpropane tri(6-mercaptohexanate), but is not limited thereto.

The tetravalent multifunctional mercaptan may be pentaerythritol tetrakis(2-mercaptoacetate), pentaerythritol tetrakis(3-mercaptopropionate), pentaerythritol tetrakis(4-mercaptobutanate), pentaerythritol tetrakis(5-mercaptopentanate), pentaerythritol tetrakis(6-mercaptohexanate), but is not limited thereto.

Preferably, as the multifunctional mercaptan, one of the compounds individually or a mixture of at least two of them may be used.

The multifunctional mercaptan may be used in an amount of 0.01 to 6 parts by weight with respect to 100 parts by weight of a monomer mixture consisting of the aromatic vinyl cyan-based monomer and styrene-based monomer, and preferably may be used in an amount of 2 to 5 parts by weight.

When the content of the multifunctional mercaptan is less than 0.01 parts by weight, it would be difficult to polymerize the copolymer resin having the required molecular weight. When the content exceeds 6 parts by weight, the remaining multifunctional mercaptan may disturb the stability of the composition.

Preferably, the composition of the aromatic vinyl cyan-based monomer and the styrene-based monomer may be 50 to 90 wt% and 10 to 50 wt%, respectively, based on the total weight of the ultra-high molecular weight copolymer resin of styrene-based monomer-vinyl cyan-based monomer.

When the content of the vinyl cyan-based monomer deviates from the above range, the thermal stability of the copolymer resin may deteriorate. When the content of the styrene-based monomer deviates from the above range, the hardness of the copolymer resin may deteriorate.

### High molecular weight copolymer resin of styrene-based monomer-vinyl cyan-based monomer (C2)

The resin composition for window frames may further include a high molecular weight copolymer resin of styrene-based monomer-vinyl cyan-based monomer having a weight average molecular weight (Mw) of 100,000 to 300,000.

When the weight average molecular weight (Mw) of the high molecular weight copolymer resin of styrene-based monomer-vinyl cyan-based monomer deviates from the above range, it may be difficult to maintain the properties, in particular the hardness of the final product.

Each monomer configuring the high molecular weight copolymer resin of styrene-based monomer-vinyl cyan-based monomer and its polymerization method are the same as those of the ultra-high molecular weight copolymer resin of styrene-based monomer-vinyl cyan-based monomer.

Also, the composition of the high molecular weight copolymer resin of styrene-based monomer-vinyl cyan-based monomer may be 1 to 50 wt% based on the total weight of the resin composition for window frames, and preferably may be 5 to 25 wt%.

When the composition of the high molecular weight copolymer resin of styrene-based monomer-vinyl cyan-based monomer is less than 1 wt%, the dispersibility of the resin would deteriorate during extrusion at a low temperature (PVC extruder), and thus poor appearance may occur. When the composition exceeds 50 wt%, the appearance may be improved, but the elongation rate and impact resistance of the product may not be achieved, and thus the balance between the required properties may be degraded.

According to an embodiment, the molecular weight distribution (Mw/Mn) of the high molecular weight copolymer resin of styrene-based monomer-vinyl cyan-based monomer may be between 2.5 and 5.0.

The term "molecular weight distribution (Mw/Mn)" as used in the present specification means the ratio of the weight average molecular weight (Mw) with respect to the number average molecular weight (Mn), based on the polydispersity of a polymer material, or a reverse value thereof represented by numerical values.

The high molecular weight copolymer resin of styrene-based monomer-vinyl cyan-based monomer may increase the miscibility with the polycarbonate and the copolymer resin of acrylic-based rubber-styrene-based monomer-vinyl cyan-based monomer, and may have a molecular weight distribution in the range of 2.5 to 5.0 to enable extrusion in a PVC resin extruder.

### Polypropylene glycol

According to the present invention, the resin composition for window frames further includes 0.5 to 5 parts by weight of polypropylene glycol, with respect to 100 parts by weight of the resin composition for window frames.

The polypropylene glycol is a substance having hydroxyl groups (-OH) at both ends of the polypropylene chain. It may be used as the main polymerization material of polyurethane together with polyethylene glycol.

The polypropylene glycol has remarkably low toxicity compared to the polyethylene glycol. Thus, while relieving the risk of hazard to human, environment compatibility may be increased.

The weight average molecular weight (Mw) of the polypropylene glycol may be 1,000 to 8,000. When the weight average molecular weight (Mw) is less than 1,000, the fluidity improving effect may deteriorate. When it exceeds 8,000, the strength may deteriorate.

In the present invention, the content of the polypropylene glycol is 0.5 to 5 parts by weight with respect to 100 parts by weight of the resin composition for window frames, and preferably may be 1 to 3 parts by weight. When the content of the polypropylene glycol is less than 0.5 parts by weight, mechanical properties such as strength or impact resistance may deteriorate. When the content exceeds 5 parts by weight, the coefficient of linear expansion and dimension stability required may not be achieved.

### Additive

Preferably, the resin composition for window frames may further include 5 to 30 parts by weight of flame retardants, 1 to 6 parts by weight of pigments, 0.01 to 5 parts by weight of antioxidants, 0.01 to 5 parts by weight of UV absorbers, and 0.3 to 5 parts by weight of lubricants, with respect to 100 parts by weight of the resin composition for window frames.

In order to improve the flame retardancy of the resin composition for window frames, a flame retardant may be introduced. As the flame retardant, a brome-based flame retardant, a chlorine-based flame retardant, or a phosphorus-based flame retardant may be selectively used.

As the brome-based flame retardant, brome-based flame retardants such as decabromodiphenyl oxide (DBDPO), octabromodiphenyl oxide (OBDPO), tetrabromobisphenol A (TBBA), 2,4,6 tribromophenoxy 1,3,5 triazine (SR-245), brominated aromatic compound (S-8010, S-4010), etc. and brominate epoxy oligomer (BEO) type flame retardants may be used. The brome-based flame retardant has excellent price competitiveness, thermal stability and weather resistance, etc., but may discharge endocrine disruptors such as dioxin or furan while the fire retardant pyrolyzes during fire combustion.

As for chlorinated paraffin and chlorinated polyethylene which may be used as a chlorine-based flame retardant, they have advantages such as excellent flame retardancy and weather resistance, but just like brome-based flame retardants, they have the disadvantage of discharging hydrogen chloride gas (HCl) fatal to human body while the flame retardant pyrolyzes during fire combustion.

Fire retardants such as triphenyl phosphate (TPP), tricresyl phosphate (TCP), resorcinol diphosphate (RDP), which is an oligomer form of 3-hydroxyphenyl phosphine, ammonium polyphosphate and triphenyl phosphate (TPP), bisphenol A diphosphate (BDP), and aromatic phosphate ester oligomer, etc. which may be used as phosphorus-based flame retardants do not discharge toxic substances during fire combustion, but have problems such that price competitiveness, property balance, flame retardancy, etc. are low as compared with the brome-based flame retardants.

The amount of flame retardant used may be 5 to 30 parts by weight with respect to 100 parts by weight of the resin composition for window frames.

The pigment may be added by making colors suiting the required color. The amount used may be 1 to 6 parts by weight with respect to 100 parts by weight of the resin composition for window frames.

As the UV absorber, benzotriazol or HALS-based absorber individually, or a mixture thereof may be used. The amount used may be 0.01 to 5 parts by weight with respect to 100 parts by weight of the resin composition for window frames.

As the lubricant, ethylene bis-stearamide or polyethylene wax stearate, PE WAX, acrylic-based polymer WAX, etc. may be used. The amount used may be 0.3 to 5 parts by weight with respect to 100 parts by weight of the resin composition for window frames.

As the antioxidant, at least one selected from the group consisting of phenolic antioxidants, phosphorus antioxidants, and sulfuric ester antioxidants individually, or a mixture thereof may be used. The amount used may be 0.01 to 5 parts by weight with respect to 100 parts by weight of the resin composition for window frames.

The antioxidants may be used in an amount of 0.01 to 5 parts by weight, preferably 0.05 to 3 parts by weight, and more preferably 0.1 to 2 parts by weight, with respect to 100 parts by weight of the resin composition including at least one or two selected from butadiene polymer, styrene-butadiene copolymer, random styrene-butadiene copolymer, styrene-butadiene-styrene block copolymer, styrene-butadiene block copolymer and multi-block copolymer in the form of styrene-butadiene-styrene-butadiene.

When the amount of antioxidant used is less than 0.01 parts by weight, the thermal stability effect due to the antioxidant cannot be achieved during use. When the amount exceeds 5 parts by weight, economic feasibility may deteriorate. Thus, it is preferable to use the antioxidant in the above range.

The resin composition for window frames according to the present invention may be prepared in pellet form by using a general mixing melting processing device such as a Banbury mixer, extruder.

Each composition contained in the resin composition for window frames may be prepared in pellet form by uniformly dispersing them in an extruder by a general method for preparing a synthetic resin and cooling the dispersed melt.

As an extruder for preparing window frames, the 92 mm twin screw (manufacturing company: Kumsan Precision), which is a PVC extruder, can be used, and the composition can be prepared according to the following extrusion conditions in Table 1 below. The prepared window frame model is chassis BF-250.

### Extrusion condition of window frames

**[Table 1]**

| Die temperature (°C) | Temperature of cylinder 3 (°C) | Temperature of cylinder 2 (°C) | Temperature of cylinder 1 (°C) | Number of rotations (rpm) | Pulling speed (m/min) | Temperature of cooling water (°C) | Load |
|---|---|---|---|---|---|---|---|
| 220 | 200 | 200 | 210 | 26 | 2.5 | 18∼19 | 78 |

Hereinafter, examples of the present invention will be explained in detail.

### Examples 1∼3 and Reference Example 1

After adding a phenolic-based antioxidant and thermal stabilizer with regard to a resin composition including 5 to 30 wt% of the ultra-high molecular weight copolymer resin of styrene-based monomer-vinyl cyan-based monomer and sufficiently mixing them in a mixer, and extruding the mixture using a twin-screw extruder of L/D=35, Φ=45mm, the extradate was prepared in pellet form.

The prepared pellet was dried at 90°C for at least 5 hours before performing injection molding. The specimens for measuring properties were prepared using a 10 oz injector at an injection temperature of 250°C. Also, the specimens for window frames were prepared using a PVC extruder under the extrusion conditions in Table 1.

### Comparative Examples 1∼4

Specimens for window frames were prepared in the same manner as Examples 1∼4 from a resin composition where the content of the high molecular weight copolymer resin of styrene-based monomer-vinyl cyan-based monomer (C2) is 5 to 30 wt%, except that the resin composition does not include an ultra-high molecular weight copolymer resin of styrene-based monomer-vinyl cyan-based monomer (C1).

The compositions of the resin composition for window frames according to the examples and comparative examples and their contents are as shown in Table 2 below.

**[Table 2]**

| Composition | Example 1 | Example 2 | Example 3 | Reference Example 1 | Comparative Example 1 | Comparative Example 2 | Comparative Example 3 | Comparative Example 4 |
|---|---|---|---|---|---|---|---|---|
| A | 40 | 40 | 40 | 40 | 40 | 50 | 70 | 65 |
| B | 30 | 30 | 30 | 30 | 30 | 30 | 20 | 30 |
| C1 | 30 | 20 | 10 | 5 | 0 | 0 | 0 | 0 |
| C2 | - | 10 | 20 | 25 | 30 | 20 | 10 | 5 |

| | | | | | | | | |
|---|---|---|---|---|---|---|---|---|
| (unit: wt%) A: polycarbonate resin B: rubber modified vinyl-based graft copolymer C1: ultra-high molecular weight copolymer of styrene-based monomer-vinyl cyan-based monomer (Mw: 1,000,000∼3,000,000) C2: high molecular weight copolymer of styrene-based monomer-vinyl cyan-based monomer (Mw: 100,000∼300,000) | | | | | | | | |

### Experimental Example 1: Impact strength

A standard test was performed at a temperature of 23°C±2 with a test specimen (A-type notch) number 5 complying with KS M3056 method as a chirpy impact strength test, and low temperature test was performed at a temperature of -10°C±2. According to KS F5602 standard, the impact should be at least 12.7 kJ/m² (standard) and at least 4.9 kJ/m² (low temperature) to be qualified.

### Experimental Example 2: Tensile strength and elongation rate

The tensile strength and elongation rate test was performed at a temperature of 23°C±2 complying with KS M3006 method. According to KS F5602 standard, the tensile strength should be at least 36.8 MN/m² and the elongation rate should be at least 30% to be qualified.

### Experimental Example 3: Coefficient of linear expansion

The coefficient of linear expansion was measured at a heating rate of 5°C/min up to 30 to 80°C using a thermomechanical analyzer (TMA).

The test results of evaluating the properties of the resin compositions for window frames according to the examples and comparative examples, and the specimens for window frames prepared therefrom are as shown in Table 3 below and Fig. 1.

**[Table 3]**

| | | | Example 1 | Example 2 | Example 3 | Reference Example 1 | Comparative Example 1 | Comparative Example 2 | Comparative Example 3 | Comparative Example 4 |
|---|---|---|---|---|---|---|---|---|---|---|
| Material evaluation standard | impact strength | 3.2mm | 67.4 | 53.4 | 44.8 | 41.8 | 39.7 | 47.7 | 65.2 | 61.3 |
| | | 6.4mm | 58.6 | 46.5 | 37.6 | 35.7 | 33.1 | 40.2 | 57.1 | 52.9 |
| | tensile strength | | 512 | 497.5 | 495.3 | 445 | 438 | 451.1 | 475.4 | 458.3 |
| | elongation rate | | 191 | 213 | 208 | 232 | 201 | 219 | 227 | 221 |
| Window frame evaluation standard | impact strength | 23 °C | 43.4 | 41.4 | 39.4 | 36.6 | 26.9 | 37.2 | 39.3 | 36.1 |
| | | -10°C | 32.5 | 31.1 | 27.4 | 22.3 | 18.8 | 20.6 | 25.9 | 25.6 |
| | tensile strength | | 41.5 | 40.1 | 39.3 | 37.1 | 35.6 | 36.4 | 38.1 | 37.7 |
| | elongation rate | | 118 | 95 | 93 | 71 | 78 | 70 | 72 | 86 |
| | coefficient of linear expansion (µm/m·°C) | | 59 | 65 | 74 | 81 | 84 | 81 | 79 | 78 |

Referring to Table 3 above and Fig. 1, the resin composition for window frames according to an embodiment of the present invention shows difference in property depending on the content of the ultra-high molecular weight copolymer resin of styrene-based monomer-vinyl cyan-based monomer (C1). In particular, the impact strength, tensile strength and elongation rate of the window frame prepared from the resin composition of Example 1 where the contents of the polycarbonate resin (A), copolymer resin of acrylic-based rubber-styrene-based monomer-vinyl cyan-based monomer (B), ultra-high molecular weight copolymer resin of styrene-based monomer-vinyl cyan-based monomer (C1) are 40 wt%, 30 wt% and 30 wt%, respectively, were 43.4 kJ/m², 41.5 MN/m², 118%, respectively, which are maximum, and the coefficient of linear expansion was 59 µm/m·°C, which is minimum. Thus, it is confirmed that the mechanical properties and dimension stability are excellent.

In this regard, as for the window frames prepared from the resin compositions of Comparative Examples 1∼4 which do not include the ultra-high molecular weight copolymer resin of styrene-based monomer-vinyl cyan-based monomer, the overall properties including mechanical properties relatively deteriorated, as compared with Examples 1∼4, such that the impact strength and tensile strength were reduced by about 10 to 40%.

Through the above examples and experimental examples, it is confirmed that the resin composition for window frames according to the present invention may be used as a raw material for preparing window frames having excellent mechanical properties and low coefficient of linear expansion.

The foregoing description of the present invention has been presented for illustrative purposes.Each component which has been described as a unitary part can be implemented as distributed parts. Likewise, each component which has been described as distributed parts can also be implemented as a combined part.

## Claims

1. A resin composition for window frames containing a polycarbonate resin, wherein the resin composition for window frames comprises: 40 to 95 wt% of a polycarbonate resin; 1 to 50 wt% of a copolymer resin of acrylic-based rubber-styrene-based monomer-vinyl cyan-based monomer; and 10 to 30 wt% of an ultra-high molecular weight copolymer resin of styrene-based monomer-vinyl cyan-based monomer having a weight average molecular weight (Mw) of 1,000,000 to 3,000,000, based on the total weight of the resin composition for window frames,
wherein the resin composition for window frames further comprises 0.5 to 5 parts by weight of polypropylene glycol, with respect to 100 parts by weight of the resin composition for window frames.

2. The resin composition for window frames according to claim 1, wherein the resin composition for window frames further comprises 1 to 50 wt% of a high molecular weight copolymer resin of styrene-based monomer-vinyl cyan-based monomer having a weight average molecular weight (Mw) of 100,000 to 300,000, based on the total weight of the resin composition for window frames.

3. The resin composition for window frames according to claim 2, wherein the molecular weight distribution (Mw/Mn) of the high molecular weight copolymer resin of styrene-based monomer-vinyl cyan-based monomer is between 2.5 and 5.0.

4. The resin composition for window frames according to claim 1, wherein the polycarbonate resin comprises at least one selected from the group consisting of bisphenol-A-polycarbonate resin, tetramethyl-polycarbonate resin, bisphenol-Z-polycarbonate resin, tetrabromo-polycarbonate resin, and tetraacrylo-polycarbonate resin.

5. The resin composition for window frames according to claim 1, wherein the copolymer resin of acrylic-based rubber-styrene-based monomer-vinyl cyan-based monomer is a copolymer resin having styrene and acrylonitrile graft-polymerized with acrylic-based rubber.

6. The resin composition for window frames according to claim 5, wherein the composition of the acrylic-based rubber, styrene, and acrylonitrile is 40 to 85 wt%, 5 to 20 wt%, and 10 to 40 wt%, respectively, based on the total weight of the copolymer resin of acrylic-based rubber-styrene-based monomer-vinyl cyan-based monomer.

7. The resin composition for window frames according to claim 1, wherein the ultra-high molecular weight copolymer resin of styrene-based monomer-vinyl cyan-based monomer is a copolymer resin having a non-linear structure polymerizing 0.005 to 7 parts by weight of multifunctional acrylic-based monomer and 0.01 to 6 parts by weight of multifunctional mercaptan, with respect to 100 parts by weight of a monomer mixture consisting of aromatic vinyl cyan-based monomer and styrene-based monomer.

8. The resin composition for window frames according to claim 7, wherein the composition of the aromatic vinyl cyan-based monomer and the styrene-based monomer is 50 to 90 wt% and 10 to 50 wt%, respectively, based on the total weight of the ultra-high molecular weight copolymer resin of styrene-based monomer-vinyl cyan-based monomer.

9. The resin composition for window frames according to claim 1, wherein the resin composition for window frames further comprises 5 to 30 parts by weight of flame retardants, 1 to 6 parts by weight of pigments, 0.01 to 5 parts by weight of antioxidants, 0.01 to 5 parts by weight of UV absorbers, and 0.3 to 5 parts by weight of lubricants, with respect to 100 parts by weight of the resin composition for window frames.

10. The resin composition for window frames according to claim 9, wherein the antioxidant comprises at least one selected from the group consisting of phenolic antioxidants, phosphorus antioxidants, and sulfuric ester antioxidants.

## Patentansprüche

1. Harzzusammensetzung für Fensterrahmen, die ein Polycarbonatharz enthält, wobei die Harzzusammensetzung für Fensterrahmen Folgendes enthält: 40 bis 95 Gew.-% eines Polycarbonatharzes; 1 bis 50 Gew.-% eines Copolymerharzes aus einem Monomer auf Acryl-Basis, einem Monomer auf Kautschuk-Styrol-Basis, einem Monomer auf Vinylcyan-Basis; und 10 bis 30 Gew.-% eines Copolymerharzes mit ultrahohem Molekulargewicht aus einem Monomer auf Styrol-Basis und einem Monomer auf Vinylcyan-Basis mit einem gewichtsgemittelten Molekulargewicht (Mw) von 1.000.000 bis 3.000.000, bezogen auf das Gesamtgewicht der Harzzusammensetzung für Fensterrahmen,
wobei die Harzzusammensetzung für Fensterrahmen ferner 0,5 bis 5 Gewichtsteile Polypropylenglykol in Bezug auf 100 Gewichtsteile der Harzzusammensetzung für Fensterrahmen enthält.

2. Harzzusammensetzung für Fensterrahmen nach Anspruch 1, wobei die Harzzusammensetzung für Fensterrahmen ferner 1 bis 50 Gew.-% eines Copolymerharzes mit hohem Molekulargewicht aus einem Monomer auf Styrol-Basis und einem Monomer auf Vinylcyan-Basis mit einem gewichtsgewmittelten Molekulargewicht (Mw) von 100.000 bis 300.000, bezogen auf das Gesamtgewicht der Harzzusammensetzung für Fensterrahmen, enthält.

3. Harzzusammensetzung für Fensterrahmen nach Anspruch 2, wobei die Molekulargewichtsverteilung (Mw/Mn) des Copolymerharzes mit hohem Molekulargewicht aus einem Monomer auf Styrol-Basis und einem Monomer auf Vinylcyan-Basis zwischen 2,5 und 5,0 liegt.

4. Harzzusammensetzung für Fensterrahmen nach Anspruch 1, wobei das Polycarbonatharz mindestens eines ausgewählt aus der Gruppe, bestehend aus Bisphenol-A-Polycarbonatharz, Tetramethyl-Polycarbonatharz, Bisphenol-Z-Polycarbonatharz, Tetrabrompolycarbonatharz, und Tetraacrylpolycarbonatharz enthält.

5. Harzzusammensetzung für Fensterrahmen nach Anspruch 1, wobei das Copolymerharz aus einem Monomer auf Acryl-Basis, einem Monomer auf Kautschuk-Sytrol-Basis, einem Monomer auf Vinylcyan-Basis ein Copolymerharz mit Styrol und Acrylnitril ist, das mit Kautschuk auf Acryl-Basis pfropfpolymerisiert ist.

6. Harzzusammensetzung für Fensterrahmen nach Anspruch 5, wobei die Zusammensetzung des Kautschuks auf Acryl-Basis, Styrols und Acrylnitrils 40 bis 85 Gew.-%, 5 bis 20 Gew.-% bzw. 10 bis 40 Gew.-% beträgt, bezogen auf auf das Gesamtgewicht des Copolymerharzes des Monomers auf Acryl-Basis, des Monomers auf Kautschuk-Styrol-Basis, des Monomers auf Vinyl-Basis und des Monomers auf Cyan-Basis.

7. Harzzusammensetzung für Fensterrahmen nach Anspruch 1, wobei das Copolymerharz mit ultrahohem Molekulargewicht aus einem Monomer auf Styrol-Basis und einem Monomer auf Vinylcyan-Basis ein Copolymerharz mit einer nichtlinearen Struktur ist, das 0,005 bis 7 Gewichtsteile von multifunktionalem Monomer auf Acryl-Basis und 0,01 bis 6 Gewichtsteile von multifunktionalem Mercaptan, bezogen auf 100 Gewichtsteile einer Monomermischung, bestehend aus aromatischem Monomer auf Vinylcyan-Basis und Monomer auf Styrol-Basis, polymerisiert.

8. Harzzusammensetzung für Fensterrahmen nach Anspruch 7, wobei die Zusammensetzung des Monomers auf Basis von aromatischem Vinylcyan und des Monomers auf Styrol-Basis 50 bis 90 Gew.-% bzw. 10 bis 50 Gew.-% beträgt, bezogen auf das Gesamtgewicht des ultrahochmolekularen Copolymerharzes aus einem Monomer auf Styrol-Basis und einem Monomer auf Vinylcyan-Basis.

9. Harzzusammensetzung für Fensterrahmen nach einem der Ansprüche 1 bis 8, **dadurch gekennzeichnet, dass** die Harzzusammensetzung für Fensterrahmen zusätzlich 5 bis 30 Gewichtsteile Flammschutzmittel, 1 bis 6 Gewichtsteile Pigmente, 0,01 bis 5 Gewichtsteile Antioxidantien, 0,01 bis 5 Gewichtsteile UV-Absorptionsmittel und 0,3 bis 5 Gewichtsteile Schmiermittel, bezogen auf 100 Gewichtsteile der Harzzusammensetzung für Fensterrahmen, enthält.

10. Harzzusammensetzung für Fensterrahmen nach Anspruch 9, wobei das Antioxidationsmittel mindestens eines ausgewählt aus der Gruppe, bestehend aus Phenolantioxidationsmitteln, Phosphorantioxidationsmitteln und Schwefelsäureesterantioxidationsmitteln enthält.

## Revendications

1. Composition de résine pour cadres de fenêtre contenant une résine de polycarbonate, dans laquelle la composition de résine pour cadres de fenêtre comprend : 40 à 95 % en poids d'une résine de polycarbonate ; 1 à 50 % en poids d'une résine de copolymère de caoutchouc à base d'acrylique-monomère à base de styrène-monomère à base de cyan de vinyle ; et 10 à 30 % en poids d'une résine de copolymère de poids moléculaire ultra-haut de monomère à base de styrène-monomère à base de cyan de vinyle ayant un poids moléculaire moyen en poids (Mw) de 1 000 000 à 3 000 000 sur la base du poids total de la composition de résine pour cadres de fenêtre,
laquelle composition de résine pour cadres de fenêtre comprenant en outre 0,5 à 5 parties en poids de polypropylène glycol, par rapport à 100 parties en poids de la composition de résine pour cadres de fenêtre.

2. Composition de résine pour cadres de fenêtre selon la revendication 1, laquelle composition de résine pour cadres de fenêtre comprenant en outre 1 à 50 % en poids d'une résine de copolymère de haut poids moléculaire de monomère à base de styrène-monomère à base de cyan de vinyle ayant un poids moléculaire moyen en poids (Mw) de 100 000 à 300 000, sur la base du poids total de la composition de résine pour cadres de fenêtres.

3. Composition de résine pour cadres de fenêtre selon la revendication 2, dans laquelle la distribution de poids moléculaire (Mw/Mn) de la résine de copolymère de haut poids moléculaire de monomère à base de styrène-monomère à base de cyan de vinyle est comprise entre 2,5 et 5,0.

4. Composition de résine pour cadres de fenêtre selon la revendication 1, dans laquelle la résine de polycarbonate comprend au moins une choisie dans le groupe constitué par une résine bisphénolA-polycarbonate, une résine tétraméhyl-polycarbonate, une résine bisphénol-Z-polycarbonate, une résine tétrabromo-polycarbonate et une résine tétraacrylo-polycarbonate.

5. Composition de résine pour cadres de fenêtre selon la revendication 1, dans laquelle la résine de copolymère de caoutchouc à base d'acrylique-monomère à base de styrène-monomère à base de cyan de vinyle est une résine de copolymère ayant du styrène et de l'acrylonitrile polymérisés en greffe avec le caoutchouc à base d'acrylique.

6. Composition de résine pour cadres de fenêtre selon la revendication 5, laquelle composition du caoutchouc à base d'acrylique, du styrène et de l'acrylonitrile étant de 40 à 85 % en poids, de 5 à 20 % en poids et de 10 à 40 % en poids, respectivement, sur la base du poids total du copolymère de résine de caoutchouc à base d'acrylique-monomère à base de styrène-monomère à base de cyan de vinyle.

7. Composition de résine pour cadres de fenêtre selon la revendication 1, dans laquelle la résine de copolymère de ultra-haut poids moléculaire de monomère à base de styrène-monomère à base de cyan de vinyle est une résine de copolymère ayant une structure non linéaire polymérisant 0,005 à 7 parties en poids de monomère à base d'acrylique multifonctionnel et 0,01 à 6 parties en poids de mercaptan multifonctionnel, par rapport à 100 parties en poids d'un mélange de monomères constitué d'un monomère à base de cyan de vinyle aromatique et d'un monomère à base de styrène.

8. Composition de résine pour cadres de fenêtre selon la revendication 7, laquelle composition du monomère à base de cyan de vinyle aromatique et du monomère à base de styrène étant de 50 à 90 % en poids et 10 à 50 % en poids, respectivement, sur la base du poids total du copolymère de résine d'ultra-haut poids moléculaire de monomère à base de styrène-monomère à base de cyan de vinyle.

9. Composition de résine pour cadres de fenêtre selon la revendication 1, laquelle composition de résine pour cadres de fenêtre comprenant en outre 5 à 30 parties en poids de retardateurs de flamme, 1 à 6 parties en poids de pigments, 0,01 à 5 parties en poids d'antioxydants, 0,01 à 5 parties en poids d'absorbeur d'UV et 0,3 à 5 parties en poids de lubrifiants, par rapport à 100 parties en poids de la composition de résine pour cadres de fenêtre.

10. Composition de résine pour cadres de fenêtre selon la revendication 9, dans laquelle l'antioxydant comprend au moins un choisi dans le groupe constitué par les antioxydants phénoliques, les antioxydants de phosphore et les antioxydants d'ester sulfurique.
